# EUROPEAN PATENT APPLICATION

(11) **EP 3 944 164 A1**
(43) Date of publication of application: **26.01.2022**
(21) Application number: 20773338.7
(22) Date of filing: 10.01.2020
(51) Int. Cl.: G06Q 10/06, G06Q 50/02

(54) **WORK INFORMATION ANALYSIS DEVICE AND WORK INFORMATION ANALYSIS METHOD**

(30) Priority: 18.03.2019 JP 2019050141
(71) Applicant: Yanmar Power Technology Co., Ltd., Osaka-shi Osaka 530-8311 (JP)
(72) Inventor: MITANI, Hideki, Osaka-shi, Osaka 530-0014 (JP)
(74) Representative: Poindron, Cyrille
(86) International application number: PCT/JP2020/000604
(87) International publication number: WO 2020/188965

(57) **Abstract**

A work information analysis device 1 includes: a work information storage unit 43 in which work information relating to each of instances of work performed during different periods on a plurality of work areas that overlap at least partially is associated with the work area in which the work was performed and the result is stored; a selection unit 41Afor selecting desired information from among a plurality of pieces of information included in the work information as a parameter for sorting the work name of each instance of work; and a display control unit 41Afor sorting and displaying the work names of each of the instances of work on the basis of the parameter selected by the selection unit.

## Description

### TECHNICAL FIELD

The invention relates to a work information analysis device and a work information analysis method.

### BACKGROUND ART

Patent Literature 1 discloses a planting support method that makes it possible to select a plurality of fields with conditions suitable for cultivation of a target crop from among a plurality of fields when a desired crop is to be planted. Specifically, topography, sunshine, soil properties, drainage capacity, tilling difficulty, cost, harvest performance, and the like for each of a plurality of fields are stored in advance as field data for each field. Next, on the basis of the field data of each field, the suitability of the field for cultivation of the desired crop is evaluated with a score, and the fields are listed in order of this evaluation score. The combination of the plurality of fields to obtain the desired yield is then selected on the basis of the evaluation scores. In this case, it is possible to rearrange the display order of the fields by using a specific parameter.

### CITATION LIST

### Patent Literature

Patent Literature 1: International Patent Publication No. 2012/086232

### DISCLOSURE OF INVENTION

### PROBLEMS TO BE SOLVED BY THE INVENTION

In a planting support method described in Patent Literature 1, when the plurality of field at positions different from each other are listed in such an order as to be suitable for planting a desired crop, it is possible to rearrange the display order of the fields by using a specific parameter. However, in the planting support method described in Patent Literature 1, work information is not analyzed among respective tasks performed in different periods for a plurality of work areas that overlap at least partially.

An object of this present invention is to provide a work information analysis device and a work information analysis method that facilitate analysis of work information among respective tasks performed in different periods for a plurality of work areas that overlap at least partially.

### MEANS FOR SOLVING THE PROBLEMS

In an aspect of the invention, there is provided a work information analysis device including: a work information storage unit that stores work information related to respective tasks performed in different periods for a plurality of work areas overlapping at least partially, in association with the work areas in which the tasks are performed; a selection unit for selecting desired information as a parameter for sorting respective work names of the tasks from among a plurality of pieces of information included in the work information; and
a display control unit for sorting the respective work names of the tasks on the basis of the parameter selected by the selection unit, and displaying the sorted work names.

In this configuration, it is easier to analyze the work information among the respective tasks performed in the different periods for the plurality of work areas that at least partially overlap.

In the aspect of the invention, the work information includes work time information related to time when each of the tasks is performed, and the display control unit is configured to sort and display the respective work names of the tasks in order of the work time when the parameter selected by the selection unit is the work time information.

In the aspect of the invention, the work information includes a cost required for each of the tasks, and the display control unit is configured to sort and display the respective work names of the tasks in order of the cost when the parameter selected by the selection unit is the cost.

In an aspect of the invention, there is provided a work information analysis method including: a first step of storing, in a storage unit, work information related to respective tasks performed in different periods for a plurality of work areas overlapping at least partially, in association with the work areas in which the tasks are performed; a second step of selecting desired information as a parameter for sorting respective work names of the tasks from among a plurality of pieces of information included in the work information; and a third step of sorting the respective work names of the tasks on the basis of the parameter selected in the second step, and displaying the sorted work names on a display unit.

In this method, it is easier to analyze the work information among the respective tasks performed in the different periods for the plurality of work areas that at least partially overlap.

The above or further other objects, features, and effects according to the present invention will become apparent from the following description of embodiments with reference to the accompanying drawings.

### BRIEF DESCRIPTION OF DRAWINGS

[FIG. 1] FIG. 1 is a schematic diagram illustrating a configuration of a work information display system according to an embodiment of the invention.
[FIG. 2A] FIG. 2A is a plan view schematically illustrating a work area A in which tillage work is performed on a field X.
[FIG. 2B] FIG. 2B is a plan view schematically illustrating a work area B in which ground levering work is performed on the field X.
[FIG. 2C] FIG. 2C is a plan view schematically illustrating a work area C in which basal fertilizer application work is performed on the field X.
[FIG. 2D] FIG. 2D is a plan view schematically illustrating a work area D in which planting work is performed on the field X.
[FIG. 2E] FIG. 2E is a plan view schematically illustrating a work area E in which pest control work is performed on the field X.
[FIG. 2F] FIG. 2F is a plan view schematically illustrating a work area F in which reaping work is performed on the field X.
[FIG. 3] FIG. 3 is a plan view schematically illustrating the positional relationship between the field X and each of the work areas A to F.
[FIG. 4A] FIG. 4A is a plan view schematically illustrating a work area G in which basal fertilizer application work is performed on a field Y.
[FIG. 4B] FIG. 4B is a plan view schematically illustrating a work area H in which planting work is performed on the field Y.
[FIG. 4C] FIG. 4C is a plan view schematically illustrating a work area I in which additional fertilizer work is performed on the field Y.
[FIG. 4D] FIG. 4D is a plan view schematically illustrating a work area J in which reaping work is performed on the field Y.
[FIG. 5] FIG. 5 is a plan view schematically illustrating the positional relationship between the field Y and each of the work areas G to J.
[FIG. 6] FIG. 6 is a schematic diagram illustrating an example of the contents of a work information management table.
[FIG. 7] FIG. 7 is a schematic diagram illustrating an example of a work area display screen.
[FIG. 8] FIG. 8 is a schematic diagram of an example of a parameter selection screen.
[FIG. 9] FIG. 9 is a schematic diagram illustrating an example of a sort result display screen.
[FIG. 10] FIG. 10 is a schematic diagram illustrating another example of the sort result display screen.
[FIG. 11] FIG. 11 is a schematic diagram illustrating yet another example of the sort result display screen.

### DESCRIPTION OF EMBODIMENTS

Hereinafter, embodiments of the invention will be described in detail with reference to the accompanying drawings.

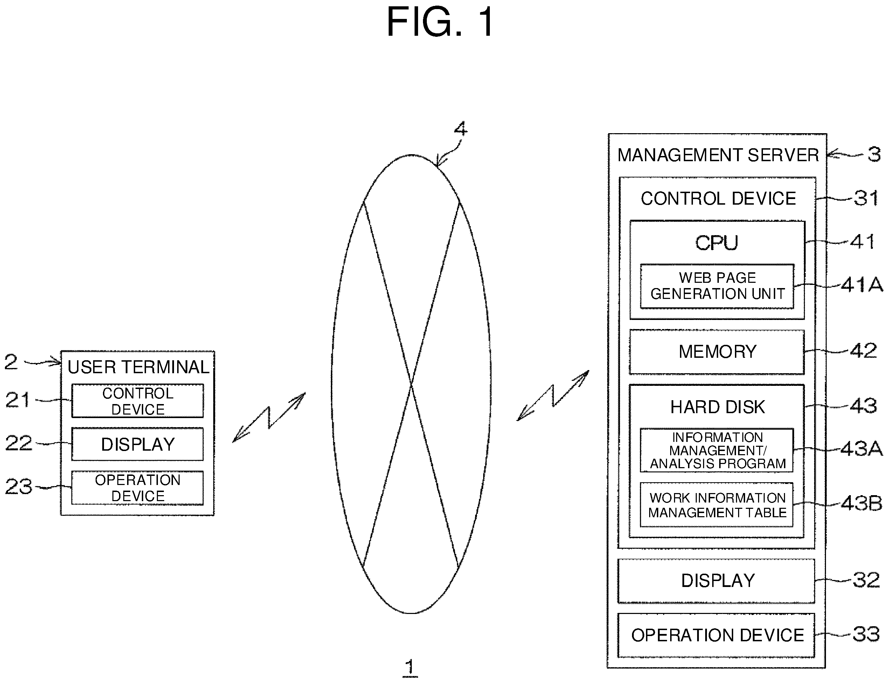

FIG. 1 is a schematic diagram illustrating a configuration of a work information display system 1 to which a work information analysis device according to one embodiment of the invention is applied.

The work information display system 1 includes a user terminal 2 used by a user who owns one or a plurality of fields, and a management server 3 as a work information analysis device. The management server 3 manages and analyzes the work information of the field owned by the user. The user terminal 2 is connected to the management server 3 via the Internet 4.

In this embodiment, it is assumed that the user owns a first field (hereinafter referred to as a "field X") and a second field (hereinafter referred to as a "field Y") in this embodiment.

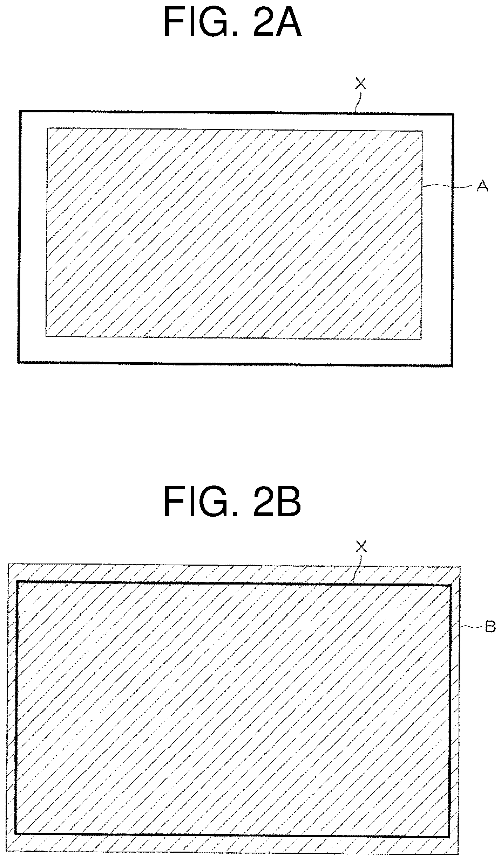

As illustrated in FIG. 2A to FIG. 2F, it is assumed that a plurality of types of work are performed on the field X during different periods. In this embodiment, the work is agricultural work.

As illustrated in FIG. 2A, it is assumed that in a certain period T1, tillage work is performed on a work area A by using, for example, a first tractor.

As illustrated in FIG. 2B, it is assumed that in a period T3 which is later than a period T2, ground leveling work is performed on a work area B by using, for example, the first tractor.

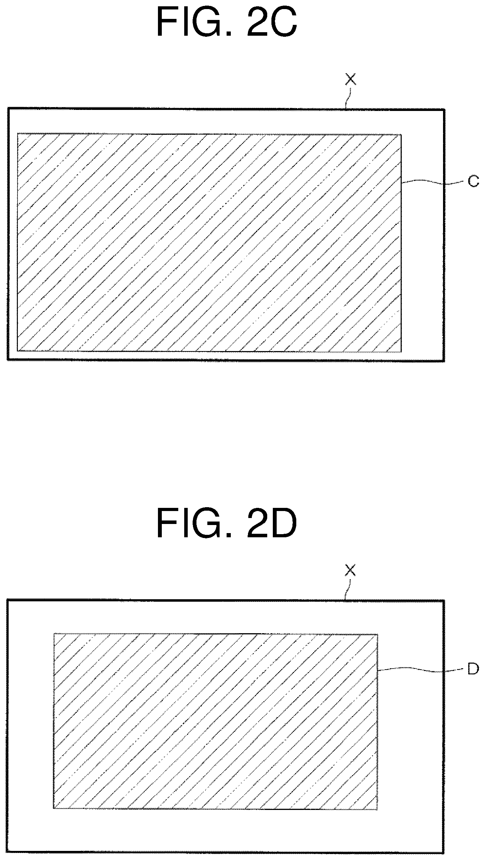

As illustrated in FIG. 2C, it is assumed that in a period T4 which is later than the period T3, basal fertilizer application work is performed on a work area C by using the first tractor.

As illustrated in FIG. 2D, it is assumed that in a period T5 which is later than the period T4, planting work is performed on a work area D, by using, for example, a transplanter.

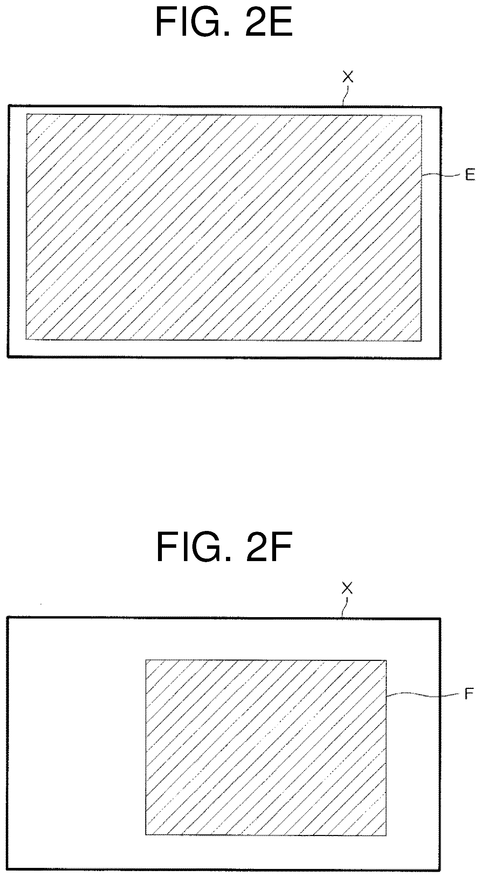

As illustrated in FIG. 2E, it is assumed that in a period T6 which is later than the period T5, pest control work is performed on a work area E, by using, for example, a second tractor.

As illustrated in FIG. 2F, it is assumed that in a period T7 which is later than the period T6, reaping work is performed on a work area F, by using, for example, a combine harvester.

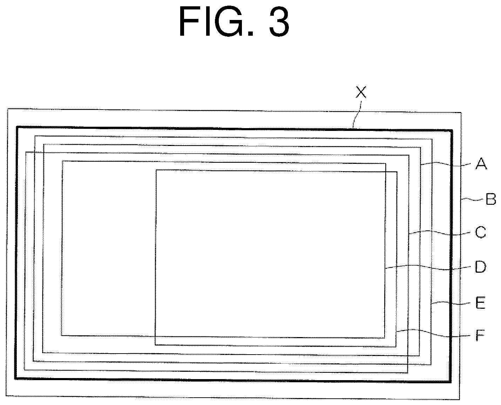

As illustrated in FIG. 3, the work areas A to F overlap at least partially.

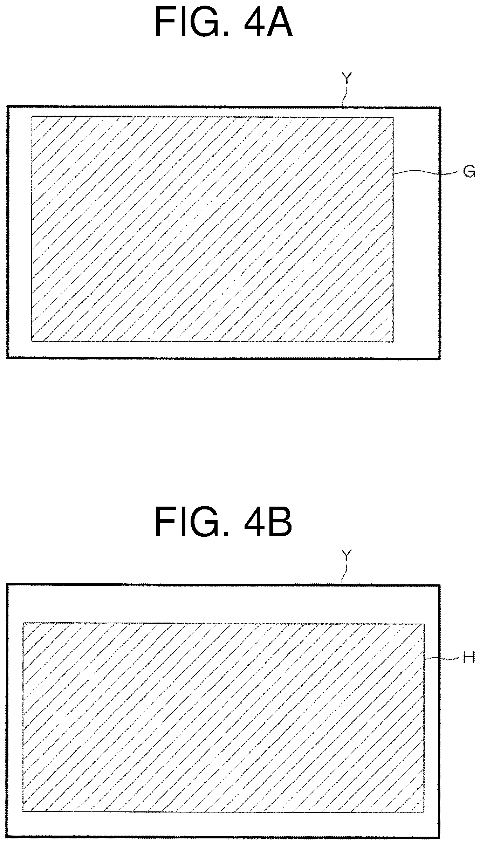

As illustrated in FIG. 4A to FIG. 4D, it is assumed that a plurality of types of work are performed on the field Y during different periods.

As illustrated in FIG. 4A, it is assumed that in a certain period T8, basal fertilizer application work is performed on a work area G by using, for example, the first tractor.

As illustrated in FIG. 4B, it is assumed that in a period T9 which is later than the period T8, planting work is performed on a work area H by using, for example, the transplanter.

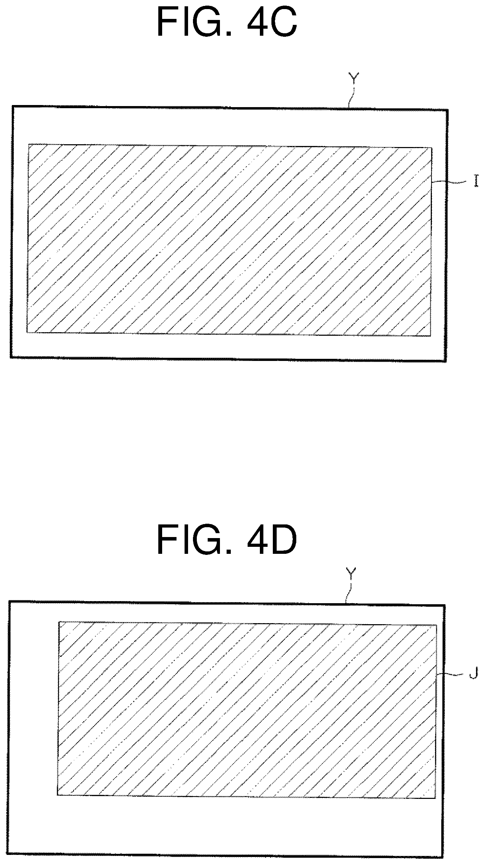

As illustrated in FIG. 4C, it is assumed that in a period T10 which is later than the period T9, additional fertilizer work is performed on a work area I by using, for example, the second tractor.

As illustrated in FIG. 4D, it is assumed that in a period T11 which is later than the period T10, reaping work is performed on a work area J by using, for example, the combine harvester.

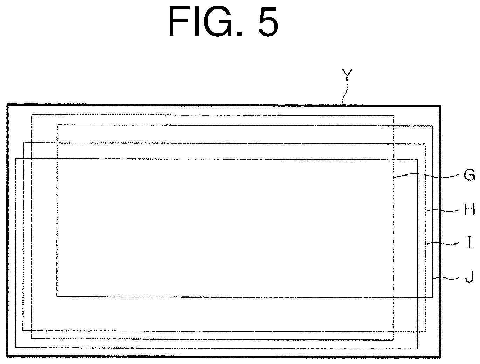

As illustrated in FIG. 5, the work areas G to J overlap at least partially.

Returning to FIG. 1, the user terminal 2 is composed of a personal computer (PC) and includes a control device (PC body) 21, a display 22, and operation devices 23 such as a mouse and a keyboard. The control device 21 includes a CPU, a memory, a hard disk, and the like. In addition to an operating system (OS), programs such as a browser for viewing web pages and other necessary data are stored in the hard disk.

The management server 3 manages work information of the fields X and Y, analyzes the work information of the fields X and Y, and causes an owner of the fields (hereinafter referred to as a user) to browse the work information of the fields X and Y or the results of the analysis thereof.

The management server 3 is composed of a personal computer (PC) and includes a control device (PC body) 31, a display 32, and operation devices 33 such as a mouse and a keyboard. The control device 31 includes a CPU 41, a memory 42, a hard disk 43, and the like.

In addition to an information management/analysis program 43A for managing and analyzing work information, a work information management table 43B and the like are stored in the hard disk 43.

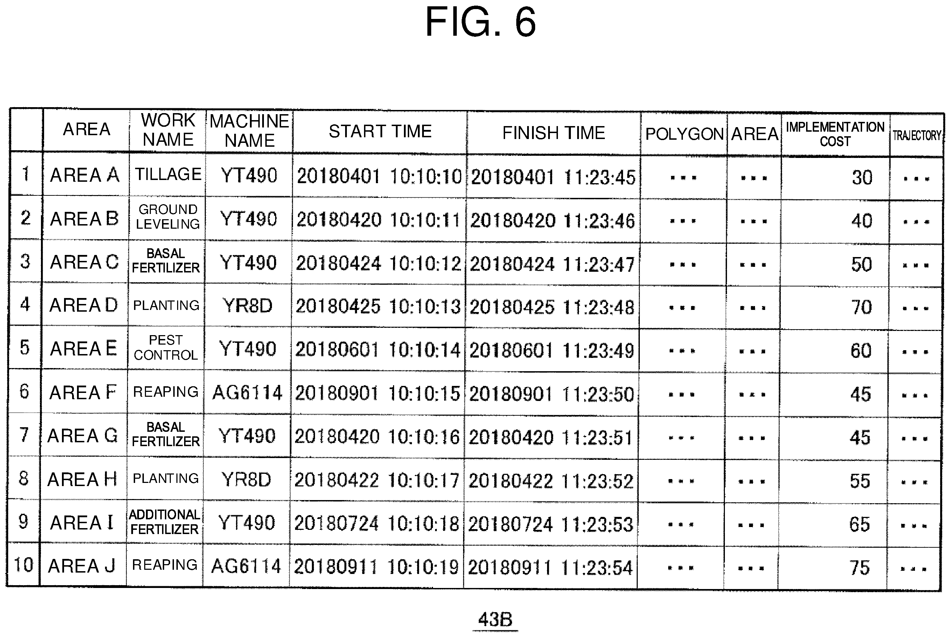

FIG. 6 is a schematic diagram illustrating an example of the contents of the work information management table 43B.

In the work information management table 43B, an area name, a work name, a machine name, a start time, an finish time, a polygon, an area, an implementation cost, and a trajectory are stored for each task (each work period). Among these information, the work name, the machine name, the start time, the finish time, the polygon, the area, the implementation cost and the trajectory are the work information. Herein, for convenience of explanation, it is assumed that work information for one year related to the field X and the field Y is stored.

The "area name" is a name (ID) to identify the work area and is assigned for each work area in which a task is performed. Herein, the respective names of the work areas A to F illustrated in FIG. 2A to FIG. 2F are illustrated as an area A, an area B, an area C, an area D, an area E and an area F. Additionally, the respective names of the work areas G to J illustrated in FIG. 4A to FIG. 4D are illustrated as an area G, an area H, an area I and an area J.

The "work name" is the name of tasks such as tillage work, ground leveling work, basal fertilizer application work, planting work, pest control work, and reaping work. In the following, the tillage work, the ground leveling work, the basal fertilizer application work, the planting work, the pest control work, and the reaping work may be simplified and represented by "tillage," "ground leveling," "basal fertilizer," "planting," "pest control," and "reaping," respectively. The "machine name" is the model number of a work vehicle used for the work, in this embodiment.

The "start time" is the start time of each task. The "finish time" is the finish time of each task. The "start time" is an example of the work time information related to the time when each task is performed.

The "polygon" is information for representing each work area as a polygon, and is composed of, for example, information of a plurality of feature points on the contour of each work area.

The "area" is the area of each work area.

The "implementation cost" is the cost per acre [yen/a] required for each task.

The "trajectory" is a set of positional information of a work vehicle that is measured using a positioning satellite at the time of work. The positional information is composed of the latitude information, the longitude the information and altitude information and the information of the time at which these pieces of the information are measured.

The user can operate the user terminal 2, open a home page provided by the management server 3, and perform a login operation to obtain a web page for his/her exclusive use. Then, the user can browse, on the web page for his/her exclusive use, area information related to work areas in which tasks are performed on the fields X and Y, work information of the tasks performed on the fields X and Y, and the other information.

In this embodiment, the user can also select, on the web page for his/her exclusive use, a parameter for sorting the respective work names of tasks performed on the field X or the field Y. When the parameter for sorting the respective work names of the tasks performed on the field X or the field Y is selected by the user, the respective work names of the tasks performed on the field are sorted by the management server 3, and an image representing the sort result is provided to the user terminal 2. Consequently, the sort result is displayed on the display 22 of the user terminal 2.

Returning to FIG. 1, the CPU 41 of the management server 3 includes a web page generation unit 41A as a functional processing unit. The web page generation unit 41A generates a general purpose webpage (webpage) or a user dedicated webpage and provides the webpage to the user terminal 2. The web page generation unit 41A is an example of a "parameter selection unit" and a "display control unit" of the present invention.

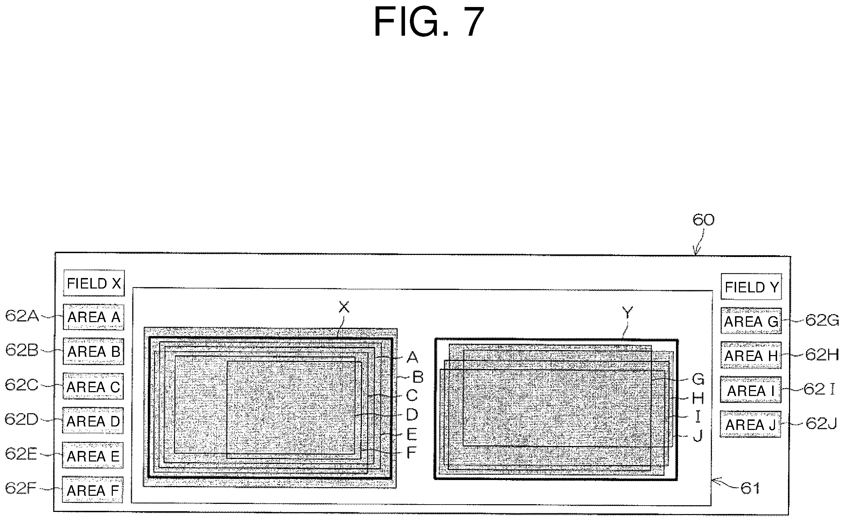

FIG. 7 is a schematic diagram illustrating an example of a work area display screen 60 displayed on the display 22 of the user terminal 2 on the basis of the user dedicated web page generated by the web page generation unit 41A.

The work area display screen 60 includes a work area image 61 composed of an image in which the field X, the work areas A to F, the field Y, and the work areas G to J are superimposed on a map, six color bars 62A to 62F arranged vertically on one lateral outer side of the work area image 61, and four color bars 62G to 62J arranged vertically on one lateral outer side of the work area image 61.

Each of the work areas A to J in the work area image 61 is painted with a different translucent color. The color bars 62A to 62J display the respective colors painted on the corresponding work areas A to J. The respective corresponding area names are displayed on the color bars 62A to 62J.

The user selects (for example, double clicks) any of the work areas A to F on the field X side when the user desires to sort, on the basis of the desired parameter, the respective work names of the tasks performed on the field X, and display the sorted work names. On the other hand, when the user desires to sort, on the basis of the desired parameter, the respective work names of the tasks performed on the field Y, and display the sorted work names, the user selects (for example, double-clicks) any of the work areas G to J on the field Y side.

Herein, it is assumed that the work area E, one of the work areas A-F, is selected. When the work area E is selected by the user, the management server 3 recognizes the work areas A to F composed of the work area E and the work areas A to D and F partially overlapping on the work area E, as the work areas corresponding to the same field (field X in this example).

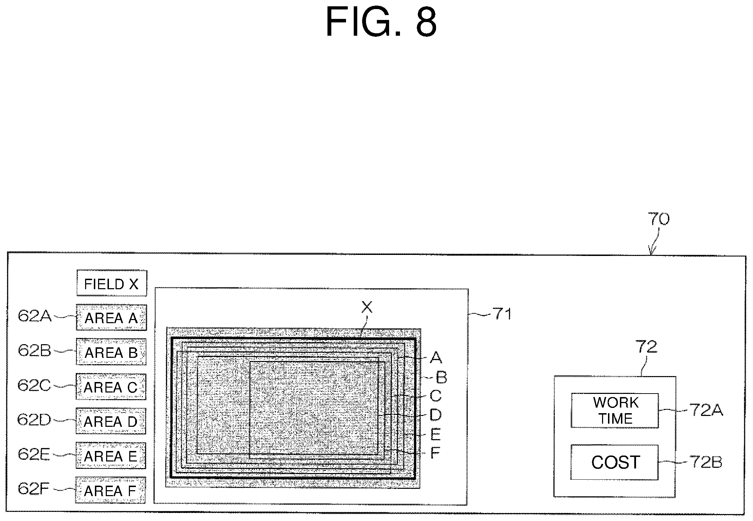

The management server 3 then generates a web page for allowing the user to select the parameter for sorting the work names of the respective tasks performed on the work areas A to F corresponding to the field X, and provides the web page to the user terminal 2. Consequently, a parameter selection screen 70 as illustrated in FIG. 8 is displayed on the display 22 of the user terminal 2.

The parameter selection screen 70 includes a work area image 71 primarily including the work areas A to F, the color bars 62A to 62F corresponding to the work areas A to F respectively, and a parameter selection unit 72. The parameter selection unit 72 includes a work time button 72A on which the word of work time is displayed and a cost button 72B on which the word of cost is displayed.

When the user desires to sort the work names on the basis of the work time, the user presses (for example, double clicks) the work time button 72A, and when the user desires to sort the work names on the basis of the implementation cost, the user presses the cost button 72B.

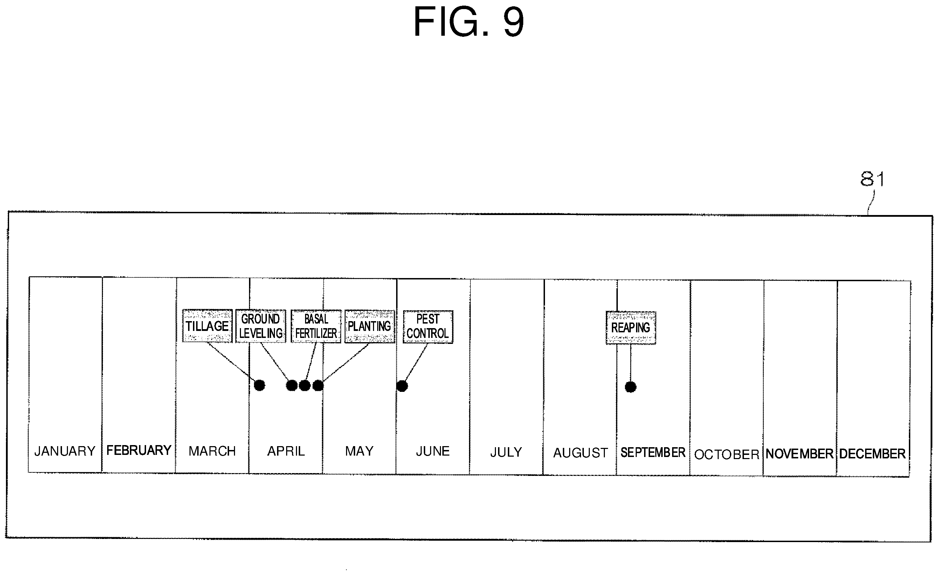

When the work time button 72A is pressed, the management server 3 sorts the respective work names of the work areas A to F on the basis of the work time (time), generates a web page including the sort result, and provides the generated web page to the user terminal 2. Consequently, a sort result display screen 81 is displayed on the display 22 of the user terminal 2, as illustrated in FIG. 9.

In the sort result display screen 81 illustrated in FIG. 9, the names from January to December are arranged and displayed in order of increasing time (ascending order) from left to right. A dividing line consisting of a vertical line is illustrated at the boundary between two adjacent month names. The respective work names performed on the work areas A to F are arranged and displayed in the order (ascending order) of the work time (start time).

Each work name is surrounded by a rectangular frame, and the inside of each rectangular frame is painted with a translucent color assigned to the work area in which the task is performed. Each rectangular frame is connected to a black circle that indicates time (start time) when the corresponding task is performed, via a drawer line.

In the example of FIG. 9, the words " tillage," " ground leveling," "basal fertilizer," "planting," "pest control," and "reaping " are displayed in this order from left to right. Black circles indicating when the "tillage," the "ground leveling," the "basal fertilizer," and the "planting" are performed are displayed in a time region of the April in this order from left to right. In addition, a black circle indicating when the "pest control" is performed is displayed near the left edge in a time region of June. Furthermore, a black circle indicating when the "reaping" is performed is displayed near the left edge in a time region of September.

From such a sort result display screen 81, the user can easily recognize the time of each of the tasks performed on the field X.

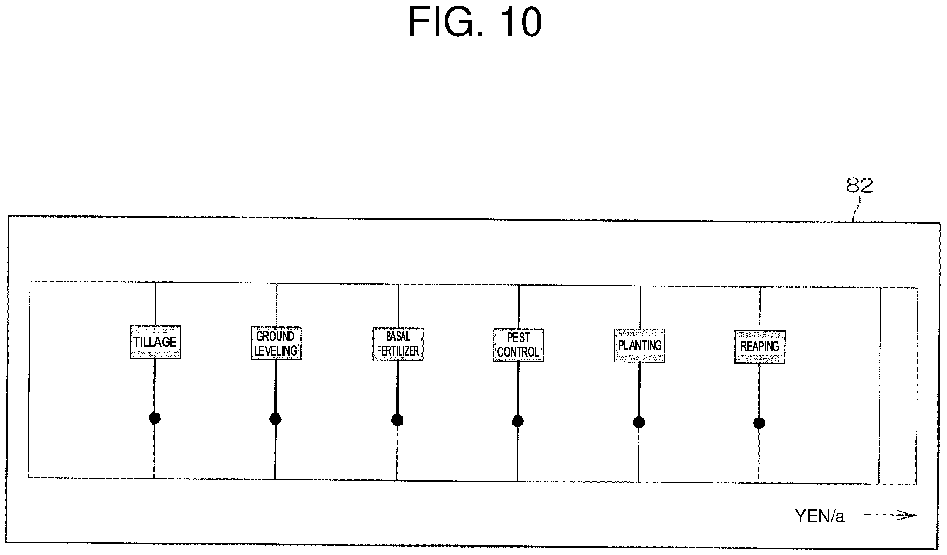

In the parameter selection screen 70 of FIG. 8, when the cost button 72B is pressed, the management server 3 sorts the respective work names of the work areas A to F on the basis of the implementation cost, generates a web page including the sort results, and provides the web page to the user terminal 2. Consequently, a sort result display screen 82 as illustrated in FIG. 10 is displayed on the display 22 of the user terminal 2.

In the sort result display screen 82 illustrated in FIG. 10, the implementation costs are taken on the horizontal axis such that the implementation costs are increased toward the right. In addition, vertical lines are illustrated at intervals of 10 [yen/a]. The names of the tasks performed on work areas A to F are arranged and displayed in order (ascending order), starting with the one with the lowest implementation cost.

Each work name is surrounded by a rectangular frame, and the inside of each rectangular frame is painted with a translucent color assigned to the work area in which the task is performed. Each rectangular frame is connected to a black circle that indicates the implementation cost of the corresponding task, via a drawer line.

In the example of FIG. 10, the words " tillage," " ground leveling," "basal fertilizer," "pest control," "planting," and "reaping " are displayed in this order from left to right. Respective black circles indicating the implementation costs of the "tillage," the "ground leveling," the "basal fertilizer," the "pest control," the "planting" and the "reaping" are displayed at the positions corresponding to these implementation costs.

From the sort result display screen 82, the user can easily recognize the implementation cost of each of the tasks performed on the field X.

In the work area display screen 60 (see FIG. 7), when any of the work areas G to J is selected, the sort result in which the respective work names of the tasks performed on the field Y are sorted on the basis of the work time, or the sort result in which the respective work names of the tasks performed on the field Y are sorted on the basis of the implementation cost can be displayed on the user terminal 2.

According to the above embodiment, it is easier to analyze work information among respective tasks performed in different periods for a plurality of work areas that at least partially overlap.

The embodiments of the present invention is thus described above, but the present invention can also be implemented in other forms. For example, in the above embodiment, the work information stored in the work information management table 43B is the work information for one year, but more than one year of work information may be stored in the work information management table 43B.

For example, it is assumed that work information for a field X for three years of fiscal years P, Q and R is stored. Then, it is assumed that any of work areas A to F is selected in a work area display screen 60 (see FIG. 7) and a work time button 72A is selected in a parameter selection screen 70 (see FIG. 8).

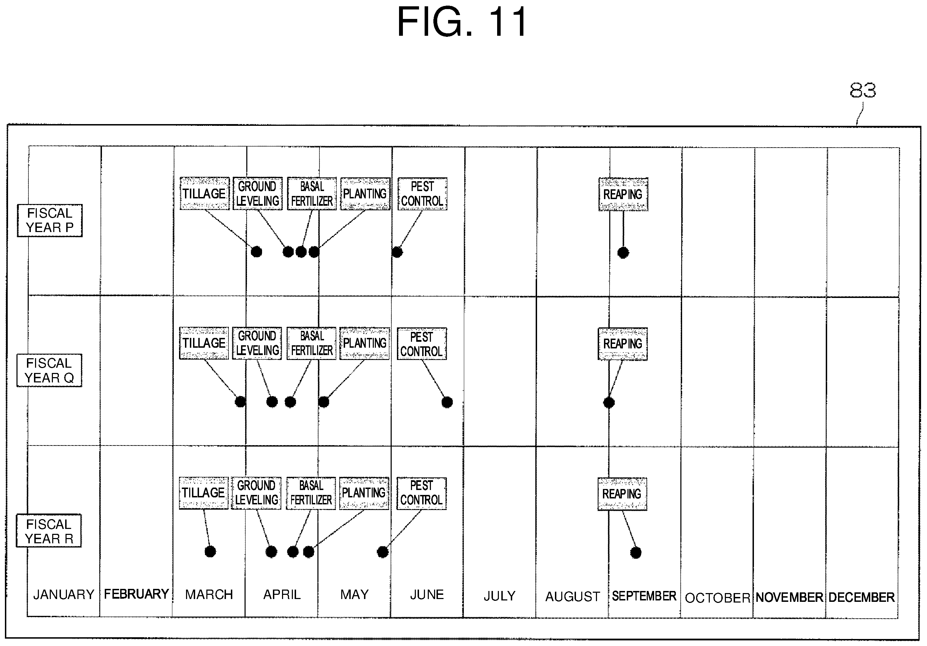

In this case, for example, a sort result display screen 83 as illustrated in FIG. 11 is displayed on a user terminal 2. That is, the sort results for the fiscal years P, Q, and R are arranged and displayed in the vertical direction. From such a sort result display screen 83, a user can easily compare the respective work times in the fiscal years P, Q and R.

In each of the sort result display screens 81, 82, 83 as illustrated in FIG. 9, FIG. 10 and FIG. 11, work information such as a machine name and a work start time may be displayed in association with each work name. For example, in addition to the work name, work information such as a machine name and a work start time may be displayed in each rectangular frame where the work name is displayed.

A different color may be assigned to each work name, and the color assigned to the work name may be painted without displaying the work name within each rectangular frame.

In the above embodiment, the user terminal 2 is composed of a personal computer (PC). However, the user terminal 2 may be also composed of a smartphone.

In addition, in the above embodiment, the management server 3 connected to the user terminal 2 via the Internet 4 has the function of managing the field, analyzing the field, and providing the work information or analysis results of the field. However, a computer capable of performing wired or wireless communication with the user terminal 2 without going through the Internet 4 may have the above function that the management server 3 has.

Although the embodiments of the present invention is described in detail, these are merely specific examples used for clarifying the technical contents of the present invention, the present invention should not be construed as being limited to these specific examples, and the scope of the present invention is limited only by the appended claims.

This application corresponds to Japanese Patent Application No. 2019-50141 filed in the Japan Patent Office on March 18, 2019, the entire disclosure of which is incorporated herein by reference.

### DESCRIPTION OF REFERENCE NUMERALS

- 1: work information display system
- 2: user terminal
- 3: management server
- 4: internet
- 21: control device
- 22: display
- 23: operation device
- 31: control device
- 32: display
- 33: operation device
- 41: CPU
- 41A: web page generation unit
- 42: memory
- 43: hard disk
- 43A: information management/analysis program
- 43B: work information management table
- 60: work area display screen
- 70: parameter selection screen
- 72: parameter selection unit
- 72A: work time button
- 72B: cost button

- 81 to 83: sort result display screen
- A to J: work area
- X, Y: field

## Claims

1. A work information analysis device comprising:
a work information storage unit that stores work information related to respective tasks performed in different periods for a plurality of work areas overlapping at least partially, in association with the work areas in which the tasks are performed;
a selection unit to select desired information as a parameter for sorting respective work names of the tasks from among a plurality of pieces of information included in the work information; and
a display control unit to sort the respective work names of the tasks on the basis of the parameter selected by the selection unit, and displaying the sorted work names.

2. The work information analysis device according to claim 1, wherein
the work information includes work time information related to time when each of the tasks is performed, and the display control unit sorts and displays the respective work names of the tasks in order of the work time when the parameter selected by the selection unit is the work time information.

3. The work information analysis device according to claim 1 or 2, wherein
the work information includes a cost required for each of the tasks, and
the display control unit sorts and displays the respective work names of the tasks in order of the cost when the parameter selected by the selection unit is the cost.

4. A work information analysis method comprising:
a first step of storing, in a storage unit, work information related to respective tasks performed in different periods for a plurality of work areas overlapping at least partially, in association with the work areas in which the tasks are performed;
a second step of selecting desired information as a parameter for sorting respective work names of the tasks from among a plurality of pieces of information included in the work information; and
a third step of sorting the respective work names of the tasks on the basis of the parameter selected in the second step, and displaying the sorted work names on a display unit.
